# FASCICULE DE BREVET EUROPEEN

(11) **EP 0 913 411 B1**
(45) Date de publication et mention de la délivrance du brevet: **17.03.2004**
(21) Numéro de dépôt: 98402683.1
(22) Date de dépôt: 28.10.1998
(51) Int. Cl.: C08G 12/38

(54) **Procédé de fabrication de résines aqueuses aminoplastes à base d'urée, de formol et de mélamine, leur utilisation comme colles dans la fabrication de matériaux dérivés du bois, et les matériaux dérivés du bois résultants**
Verfahren zur Herstellung von wässrigen Harnstoff-Melamin-Formaldehyd-Aminoplastharzen, daraus hergestellten Klebstoffe für Holzwerkstoffe und damit hergestellte Holzwerkstoffhaltige Materialien
Process for preparing aqueous urea-formaldehyde-melamine aminoplast resins, their use in adhesives for wood products and the obtained wood products

(30) Priorité: 31.10.1997 FR 9713703
(43) Date de publication de la demande: 06.05.1999
(73) Titulaire: Atofina, 92800 Puteaux (FR)
(72) Inventeur: Lalo, Jack, 31400 Toulouse (FR); Garrigue, Roger, 31000 Toulouse (FR)
(74) Mandataire: Rieux, Michel

(56) Documents cités:
- EP-A- 0 323 778
- US-A- 3 488 310

## Description

La présente invention porte sur un procédé de fabrication de résines aqueuses aminoplastes à base d'urée, de formol et de mélamine (résines MUF), sur l'utilisation de ces résines en tant que colles dans la fabrication de produits dérivés du bois, et sur les matériaux dérivés du bois obtenus avec utilisation de ces colles.

Dans l'industrie du bois, il est bien connu d'utiliser des résines aqueuses aminoplastes à base d'urée et de formol pour le collage de fragments de bois, comme les copeaux de bois et les fibres de bois, afin d'obtenir les matériaux dérivés du bois correspondants que sont les panneaux de particules et les panneaux de fibres.

Industriellement, les fragments de bois sont transportés sur un tapis roulant sur lequel ils sont imprégnés et agglutinés par la colle également déversée sur le tapis roulant, afin d'obtenir des panneaux préformés devant répondre à des caractéristiques prédéterminées. Ces panneaux sont ensuite soumis à un pressage à chaud pour terminer leur fabrication.

On voit donc que les colles doivent répondre à un certain nombre de conditions qui auront une influence à tel ou tel stade de la chaîne de fabrication :
- d'abord, la fabrication proprement dite de la colle, dont on cherche naturellement à améliorer la productivité ;
- le stockage et le transport de la colle jusqu'à son point de mise en oeuvre ;
- ensuite, la fabrication des panneaux préformés et
- enfin la mise sous presse finale devant conduire aux panneaux de particules et similaires, prêts à être commercialisés.

Le procédé de fabrication de la résine est important car, de lui, dépend le comportement de ladite résine.

D'une manière générale, les propriétés visées de mise en oeuvre de ces colles sont une réactivité élevée ainsi qu'une viscosité peu élevée pour une teneur en matières solides élevée, pour parvenir à des cycles opératoires courts, en particulier à des temps de pressage courts. De plus, les colles doivent pouvoir être stockées pendant la plus longue durée possible, sans voir changer leurs propriétés.

De plus, la colle faisant partie intégrante des produits finis (panneaux) et ayant donc une influence sur les propriétés mécaniques de ceux-ci, il est donc également normal de prendre en considération les caractéristiques mécaniques telles que :
- la résistance à l'humidité mesurée par le gonflement des panneaux après immersion dans l'eau, qui doit être la plus faible possible ; et
- la résistance à la traction perpendiculaire et à la flexion, qui doivent être les plus élevées possible,
ainsi que la caractéristique du formol perforateur (traduisant les émanations de formol), lequel doit être le plus faible possible.

De plus, tout au long de la chaîne de fabrication, l'émanation de formol doit être la plus faible possible, aussi bien au cours du procédé de préparation de la colle que pendant son stockage et son transport, puis au cours de la fabrication de panneaux. Cependant, il faut garder à l'esprit que si l'on diminue la quantité de formol mise en oeuvre, la réactivité et la stabilité des résines diminuent et les propriétés mécaniques des produits finis se dégradent.

Des panneaux de particules et similaires ayant de bonnes propriétés mécaniques et, en particulier, une bonne résistance à l'eau ont été obtenus à l'aide de résines aminoplastes à base d'urée et de formol, dans la préparation desquelles entre également de la mélamine ou du phénol. Les résines à base d'urée, de formol et de mélamine (résines MUF) ont l'avantage que les panneaux de particules ou similaires résultants ne foncent pas.

Les résines mélamine urée formol peuvent être obtenues par mélange de condensat urée formol et de condensat mélamine formol (FR-A-1 319 269 ; DE-A-2 422 650 ; DE-A-2 422 803 ; EP-A-52 212).

Elles peuvent également être obtenues par un procédé en deux étapes. Dans une première étape, la mélamine et le formol réagissent pour former un condensat, lequel est converti, dans une deuxième étape, avec de l'urée en produit de condensation mélamine urée formol (US-A-4 123 579).

Un autre procédé en deux étapes consiste, dans un premier temps, à faire réagir l'urée et le formol en milieu légèrement acide pour former un produit de condensation, puis, dans un second temps, à ajouter de la mélamine en milieu basique qui permet d'obtenir, après condensation, une résine mélamine urée formol (DE-A-2 455 420).

Le produit de condensation urée mélamine formol peut également être préparé directement par réaction entre l'urée, la mélamine et le formol, des solutions aqueuses concentrées de formol et d'urée pouvant être également utilisées à cet effet (US-A-3 891 590). Le même type de procédé est décrit pour la préparation de résines mélamine urée formol (EP 185 205), obtenues par mélange du produit de condensation mélamine urée formol et d'urée. L'optimisation du rapport entre la quantité d'urée post ajoutée et la quantité totale d'urée (WO 95/20 000) ou du rapport molaire mélamine sur urée (DE-A-19 532 719) permettant d'obtenir des résines mieux adaptées à leurs conditions d'utilisation.

On peut citer pour finir un procédé en deux étapes de fabrication de résine mélamine urée formol, caractérisé par une faible vitesse de dégagement de formol lors du processus de durcissement. Dans l'étape initiale, l'urée et une petite quantité de mélamine sont méthylolées en milieu alcalin. Dans la deuxième étape, avec le reste d'urée et de mélamine, la réaction de condensation est réalisée en milieu neutre (US-A-4 536 245). Le procédé s'applique en priorité à des résines ayant une faible teneur en mélamine.

La Société déposante a maintenant découvert qu'en préparant le produit de condensation en deux étapes dans des conditions spécifiques de condensation, on parvient à des colles qui présentent une très grande stabilité, une bonne réactivité en tube et sous presse, et permettent d'obtenir des panneaux avec de très bonnes propriétés physico-mécaniques. Ce procédé est par ailleurs très performant quand il s'agit de préparer des panneaux à très faible dégagement de formol.

Le procédé selon l'invention pour la fabrication d'une résine aqueuse aminoplaste à base d'urée, de formol et de mélamine, le taux de mélamine dans la résine finale étant compris entre 10 et 40 % en poids par rapport à la résine totale, procédé suivant lequel on effectue une condensation d'urée, de formol et de mélamine, puis on ajoute de l'urée afin d'obtenir un rapport molaire F/NH₂ de la résine finale compris entre 0,25 et 0,85, est caractérisé par le fait que l'on réalise une étape de méthylolation (a) suivie de deux étapes de condensation (b) et (c), en procédant comme suit :
(a) on chauffe au reflux, pendant une durée pouvant aller jusqu'à 15 minutes en maintenant le pH de 7-8,5, un mélange en milieu aqueux d'urée, de formol et de mélamine, à un rapport molaire formol sur groupements NH₂ de 0,85 à 1,15 ; puis
(b) on réalise la première étape de condensation à une valeur de pH comprise entre 5 et 6,5 et à une température comprise entre 70°C et 100°C, jusqu'à un degré de condensation correspondant à une viscosité à 25°C dont la valeur dépend de la matière active du milieu, et on arrête la réaction de condensation en amenant le pH à une valeur de 7-8, et la température, à une valeur comprise entre 60 et 80°C ;
(c) on réalise la deuxième étape de condensation en ajoutant du formol, de l'urée et le reste de la mélamine de telle sorte que le rapport molaire formol sur groupements NH₂ soit compris entre 0,6 et 0,9, et on procède à la condensation à une valeur de pH comprise entre 8 et 10 et à une température comprise entre 70 et 100°C, jusqu'à un degré de condensation correspondant à une viscosité à 25°C dont la valeur dépend de la matière active,
et l'on termine par une étape (d) de post-addition d'urée,
les groupements NH₂ indiqués comprenant les moles d'urée et les moles de mélamine.

Pour chacune des étapes (a) et (b), on peut introduire au moins une partie de l'urée et du formol sous la forme d'une solution aqueuse concentrée d'urée et de formol (par exemple formol : 50% en poids, urée : 20% en poids).

Par ailleurs, à l'étape (a), on peut introduire de 5 à 50% en poids de la mélamine totale.

La condensation de l'étape (b) peut être conduite pendant un laps de temps de 20 à 60 minutes, et celle de l'étape (c), pendant un laps de temps de 30 à 120 minutes.

Les réactions de chacune des étapes (a), (b) et (c) sont généralement conduites à une concentration en matières actives (rapport mélamine + urée + formol/masse totale exprimé en poids) comprise entre 50 et 75% en poids.

Après l'étape (c), on conduit l'étape (d) de post-addition d'urée : on refroidit le milieu réactionnel à une température de 40 à 60°C, et on rajoute de l'urée à la valeur du pH de l'étape précédente pendant un laps de temps pouvant aller jusqu'à 60 minutes, de telle sorte que le rapport molaire final formol sur groupements NH₂ soit compris entre 0,25 et 0,85.

Après la dernière addition d'urée, l'extrait sec de la résine finale est de 50 à 75% en poids. Pour mesurer l'extrait sec, on place un échantillon de 1 g de résine pendant 2 heures dans une étuve à 120°C. L'extrait sec de la résine est mesuré par le poids restant après traitement.

La présente invention porte également sur l'utilisation de la résine aminoplaste ainsi obtenue comme colle dans la fabrication de produits dérivés du bois, ainsi que sur les matériaux dérivés du bois obtenus avec l'utilisation, comme colle, de la résine aqueuse aminoplaste obtenue par le procédé décrit ci-dessus.

Les Exemples suivants illustrent encore l'invention. Dans les Exemples, les pourcentages sont en poids sauf indication contraire.

### EXEMPLE 1 : Préparation d'une résine urée-formol-mélamine à 24% de mélamine et F/NH₂ = 0,35

### Etape (a)

Dans un réacteur, on introduit 1202,5 g de précondensat urée-formol (pH > 5) (F = 47,85% ; U = 19,82%), 137 g d'eau, 52,5 g d'urée et 360 g de mélamine.

On ajuste la valeur du pH à 7 (avec de la soude à 10%), puis on chauffe à la température du reflux. On laisse à cette température pendant 10 minutes. La valeur du pH est maintenue supérieure à 7 par addition de soude.

On refroidit à la température de 80°C, puis on laisse chuter le pH à 6,3. On maintient le pH au-dessus de cette valeur si nécessaire par addition de soude. La réaction de condensation est suivie par la mesure de la viscosité à 25°C.

| | | | |
|---|---|---|---|
| Temps (min.) | 25 | 40 | 60 |
| Viscosité (mPa.s) | 597 | 869 | 1331 |

### Etape (b)

Dès que le test d'arrêt est atteint, la valeur du pH est remontée à 7,2 par addition de soude et la température du milieu réactionnel est amenée à 70°C. On ajoute 1115,5 g de précondensat urée-formol (F = 47,85% ; U = 19,82%), 425,7 g d'eau. La valeur du pH est alors remontée à 7,8, puis 1080 g de mélamine sont introduits. Dès que 10% de la mélamine ont été introduits, on remonte la valeur du pH à 8,5.

Dès que la totalité de la mélamine a été introduite, on maintient le pH à une valeur supérieure à 8,5 (8,5-8,7) par addition de soude, et on chauffe le milieu réactionnel à la température de 90°C. La réaction de condensation est suivie par la mesure de la viscosité à 25°C.

| | | | | | | | | |
|---|---|---|---|---|---|---|---|---|
| Temps (min.) | 5 | 15 | 25 | 35 | 47 | 65 | 75 | 85 |
| Viscosité (mPa.s) | 326 | 353 | 380 | 407 | 415 | 434 | 516 | 597 |

Dès que le test d'arrêt est atteint, on refroidit le milieu réactionnel à la température de 60°C, puis on ajoute 1628 g d'urée.

Les caractéristiques de la résine finale sont les suivantes :
- Viscosité = 155 mPa.s
- Masse volumique = 1,303 g/cm³
- Extrait sec = 68,3%
- pH = 9,6

### EXEMPLE 2 (comparatif) :

Un mélange de :
- 1440 g de mélamine (11,43 moles) ;
- 2290 g d'une solution aqueuse de formol à 49,96% et d'urée à 19,07% (formol : 38,14 moles ; urée : 7,28 moles)
- 68,8 g d'urée (1,47 moles) et
- 514,6 g d'eau
est condensé à une valeur de pH de 8,7 (addition de solution aqueuse de soude à 10%), à une température de 90°C, jusqu'à une viscosité de 200 mPa.s, mesurée à 25°C.

Le milieu réactionnel est refroidi jusqu'à une température de 60°C, puis 1942 g d'urée (32,4 moles) sont ajoutés. A la température ambiante, la valeur du pH est amenée à 9,5.

### EXEMPLE 3

Dans un réacteur, on introduit :
- 1152 g de précondensat (formol : 49,96% urée : 19,07%) ;
- 52,5 d'urée ;
- 360 g de mélamine ; et
- 137 g d'eau.

On ajuste la valeur du pH à 7 par addition de soude (soude à 10% p/p) , puis on chauffe à la température de reflux. On maintient le milieu réactionnel à cette température et à ce pH (addition de soude pendant 10 minutes).

On refroidit à la température de 80°C et on laisse chuter la valeur du pH à 6,3. On maintient cette valeur par ajout de soude si nécessaire. La réaction de condensation est suivie par la mesure de la viscosité à 25°C.

Dès que le test d'arrêt est atteint - viscosité à 1250 mPa.s à 25°C -, on remonte la valeur du pH à 7,2 par addition de soude et on refroidit le milieu réactionnel à 70°C. On introduit 1115,5 g de précondensat (formol : 49,96% ; urée : 19,07%) et 425,7 g d'eau. On remonte la valeur du pH à 8,5 par addition de soude, puis on ajoute 1080 g de mélamine. On maintient la valeur du pH à 8,5 et on chauffe le milieu réactionnel à la température de 90°C. La réaction de condensation est suivie par la mesure de la viscosité à 25°C. Dès que le test d'arrêt est atteint - viscosité à 25°C de 600 mPa.s -, on refroidit le milieu réactionnel à la température de 60°C, puis on ajoute 1857,6 g d'urée. Dès dissolution de l'urée, on refroidit à 20°C.

### EXEMPLE 4 (comparatif)

Un mélange de :
- 1440 g de mélamine (11,43 moles) ;
- 2193,2 g d'une solution aqueuse de formol à 49,96% et d'urée à 19,07% (formol : 36,52 moles ; urée : 6,98 moles) ;
- 14,1 g d'urée (0,235 mole) et
- 448,3 g d'eau
est condensé à une valeur de pH de 8,7 (addition de solution aqueuse de soude à 10%), à une température de 90°C, jusqu'à une viscosité de 800 mPa.s mesurée à 25°C.

Le milieu réactionnel est refroidi jusqu'à une température de 60°C, puis 1859,4 g d'urée (31 moles) sont ajoutés. A température ambiante, la valeur du pH est amenée à 9,5.

### EXEMPLE 5

Dans un réacteur, on introduit :
- 1065 g de précondensat (formol : 49,96% ; urée : 19,07%) ;
- 41,3 g d'urée ;
- 360 g de mélanine ; et
- 157,5 g d'eau.

On ajuste la valeur du pH à 7 par addition de soude (soude à 10% p/p), puis on chauffe à la température de reflux. On maitient le milieu réactionnel à cette température et à ce pH (addition de soude pendant 10 minutes). On refroidit à la température de 80°C et on laisse chuter la valeur du pH à 6,3. On maitient à cette valeur par ajout de soude si nécessaire. La réaction de condensation est suivie par la mesure de la viscosité à 25°C.

Dès que le test d'arrêt est atteint - viscosité de 1350 mPa.s à 25°C -, on remonte la valeur du pH à 7,2 par addition de soude et on refroidit le milieu réactionnel à 70°C. On introduit 1079,4 g de précondensat (formol : 49,96% ; urée : 19,07%) et 448 g d'eau. On remonte la valeur du pH à 8,5 par addition de soude, puis on ajoute 1080 g de mélamine. On maitient la valeur du pH à 8,5 et on chauffe le milieu réactionnel à la température de 90°C. La réaction de condensation est suivie par la mesure de la viscosité à 25°C. Dès que le test d'arrêt est atteint - viscosité à 25°C de 600 mPa.s -, on refroidit le milieu réactionnel à la température de 60°C, puis on ajoute 1743,6 g d'urée. Dès dissolution de l'urée, on refroidit à 20°C.

### EXEMPLE 6 (exemple d'application des résines des Exemples 1 à 5).

On a préparé des panneaux de particules monocouches de 500 x 450 x 17 mm (deux panneaux par cas), avec des copeaux de pin des Landes (mélange 1/3 extérieur - 2/3 intérieur), dans les conditions suivantes :
- Encollage : 6,5% de résine sèche/bois sec
- Catalyse NH₄Cl 3% sec/résine sèche ou HCOOH 3,5% sec/résine sèche
- Mélange collant : 52% de matières sèches
- Prépresse : 5 kg/cm² - temps : 1 min.
- Presse : 30 kg/cm² - température = 185°C.

Les caractéristiques des résines des Exemples 1 à 5 et les propriétés physico-mécaniques des panneaux encollés à l'aide de celles-ci sont données dans le Tableau 1 ci-après.

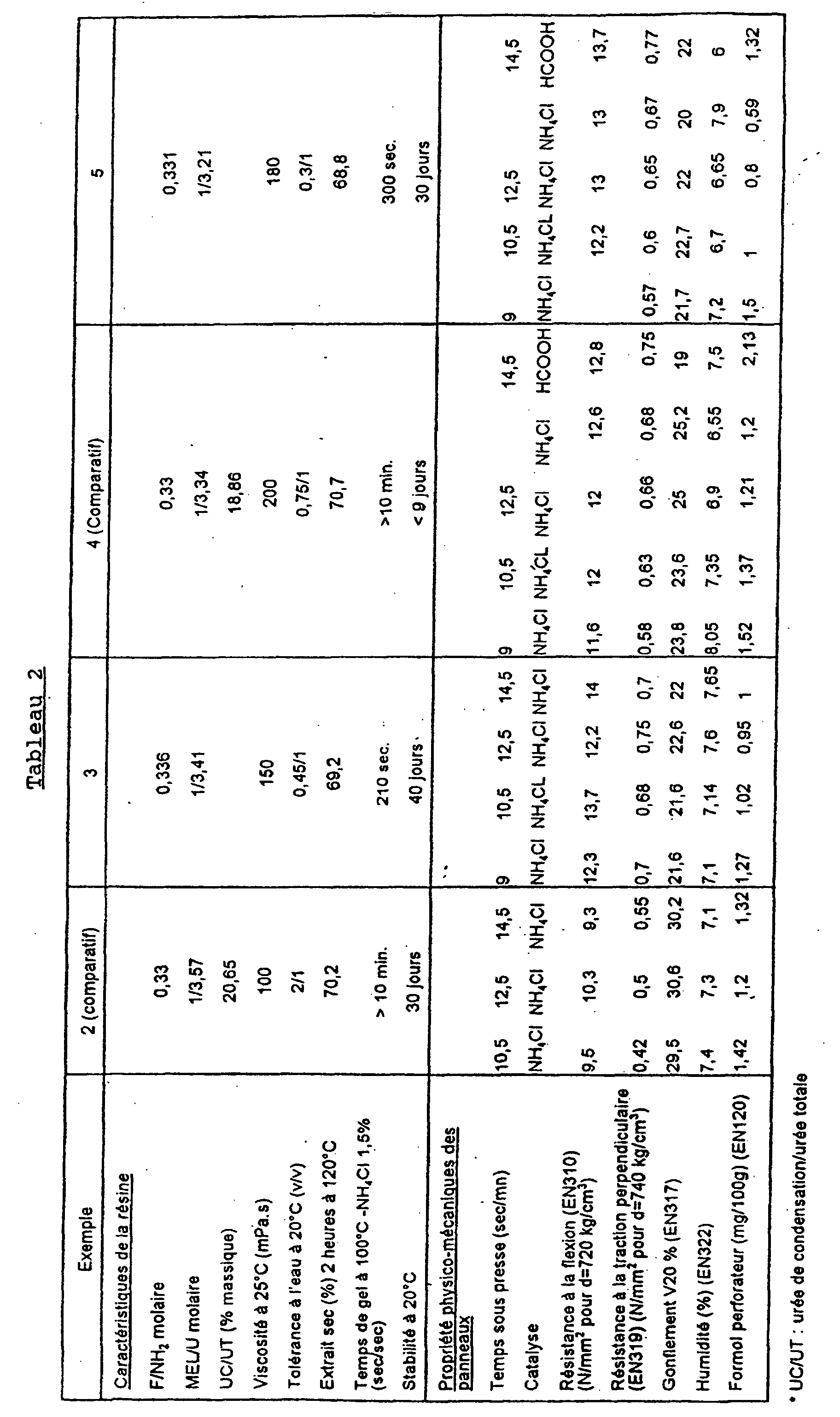

Les résines préparées conformément aux Exemples 10 et 12 présentent une bonne stabilité quel que soit le degré de condensation et une meilleure réactivité.

## Revendications

1. Procédé de fabrication d'une résine aqueuse aminoplaste à base d'urée, de formol et de mélamine, le taux de mélamine dans la résine finale étant compris entre 10 et 40% en poids par rapport à la résine totale, procédé suivant lequel on effectue une condensation d'urée, de formol et de mélamine, puis on ajoute de l'urée afin d'obtenir un rapport molaire F/NH₂ de la résine finale compris entre 0,25 et 0,85, **caractérisé par le fait que** l'on réalise une étape de méthylolation (a) suivie de deux étapes de condensation (b) et (c), en procédant comme suit :
(a) on chauffe au reflux, pendant une durée pouvant aller jusqu'à 15 minutes en maintenant le pH de 7-8,5, un mélange en milieu aqueux d'urée, de formol et de mélamine, à un rapport molaire formol sur groupements NH₂ de 0,85 à 1,15 ; puis
(b) on réalise la première étape de condensation à une valeur de pH comprise entre 5 et 6,5 et à une température comprise entre 70°C et 100°C, jusqu'à un degré de condensation correspondant à une viscosité à 25°C dont la valeur dépend de la matière active du milieu, et on arrête la réaction de condensation en amenant le pH à une valeur de 7-8, et la température, à une valeur comprise entre 60 et 80°C ;
(c) on réalise la deuxième étape de condensation en ajoutant du formol, de l'urée et le reste de la mélamine de telle sorte que le rapport molaire formol sur groupements NH₂ soit compris entre 0,6 et 0,9, et on procède à la condensation à une valeur de pH comprise entre 8 et 10 et à une température comprise entre 70 et 100°C, jusqu'à un degré de condensation correspondant à une viscosité à 25°C dont la valeur dépend de la matière active,
et l'on termine par une étape (d) de post-addition d'urée,
les groupements NH₂ indiqués comprenant les moles d'urée et les moles de mélamine.

2. Procédé selon la revendication 1, **caractérisé par le fait qu'**à l'étape (a) et/ou (b), on introduit au moins une partie de l'urée et du formol sous la forme d'une solution aqueuse concentrée d'urée et de formol.

3. Procédé selon l'une des revendications 1 et 2, **caractérisé par le fait qu'**à l'étape (a), on introduit de 5 à 50% en poids de la mélamine totale.

4. Procédé selon l'une des revendications 1 à 3, **caractérisé par le fait que** l'on conduit la condensation de l'étape (b) pendant un laps de temps de 20 à 60 minutes.

5. Procédé selon l'une des revendications 1 à 4, **caractérisé par le fait que** l'on conduit la condensation de l'étape (c) pendant un laps de temps de 30 à 120 minutes.

6. Procédé selon l'une des revendications 1 à 5, **caractérisé par le fait que** l'on conduit chacune des étapes (a), (b) et (c) à une concentration en matières actives de 50 à 75% en poids.

7. Procédé selon l'une des revendications 1 à 6, **caractérisé par le fait qu'**après l'étape (c), pour conduire l'étape (d), on refroidit le milieu réactionnel à une température de 40 à 60°C, et on rajoute de l'urée à la valeur du pH de l'étape précédente pendant un laps de temps pouvant aller jusqu'à 60 minutes, de telle sorte que le rapport molaire final formol sur groupements NH₂ soit compris entre 0,25 et 0,85.

8. Procédé selon l'une des revendications 1 à 7, **caractérisé par le fait que** l'on prépare une résine finale ayant un extrait sec de 50 à 75% en poids.

9. Utilisation de la résine aqueuse aminoplaste obtenue par le procédé tel que défini à l'une des revendications 1 à 8 comme colle dans la fabrication de produits dérivés du bois.

10. Matériaux dérivés du bois obtenus avec l'utilisation, comme colle, de la résine aqueuse aminoplaste obtenue par le procédé tel que défini à l'une des revendications 1 à 8.

## Patentansprüche

1. Verfahren zur Herstellung eines wässrigen Aminoplastharzes auf der Basis von Harnstoff, Formaldehyd und Melamin, wobei der Melamingehalt in dem fertigen Harz im Bereich von 10 bis 40 Gew.-%, bezogen auf das gesamte Harz, liegt, wobei nach diesem Verfahren eine Kondensation von Harnstoff, Formaldehyd und Melamin durchgeführt und anschließend Harnstoff zugegeben wird, um in dem fertigen Harz ein Molverhältnis F/NH₂ im Bereich von 0,25 bis 0,85 zu erhalten, **dadurch gekennzeichnet, dass** eine Hydroxymethylierung (a) und anschließend zwei Kondensationsschritte (b) und (c) durchgeführt werden, wobei folgendermaßen verfahren wird:
(a) ein Gemisch von Harnstoff, Formaldehyd und Melamin wird in einem wässrigen Medium mit einem Molverhältnis des Formaldehyd zu den NH₂-Gruppen von 0,85 bis 1,15 während einer Zeitdauer, die bis zu 15 Minuten betragen kann, auf Rückflusstemperatur erwärmt, wobei der pH-Wert im Bereich von 7 bis 8,5 gehalten wird; dann
(b) der erste Kondensationsschritt wird bei einem pH-Wert im Bereich von 5 bis 6,5 und einer Temperatur im Bereich von 70 bis 100 °C durchgeführt, bis ein Kondensationsgrad erreicht ist, der bei 25 °C einer Viskosität entspricht, deren Wert von der aktiven Substanz des Mediums abhängt, die Kondensation wird abgebrochen, indem der pH-Wert auf einen Wert von 7 bis 8 und die Temperatur auf einen Wert im Bereich von 60 bis 80 °C eingestellt wird;
(c) der zweite Kondensationsschritt wird durchgeführt, indem Formaldehyd, Harnstoff und das restliche Melamin so zugegeben werden, dass das Molverhältnis von Formaldehyd und NH₂-Gruppen im Bereich von 0,6 bis 0,9 liegt, die Kondensation wird bei einem pH-Wert im Bereich von 8 bis 10 und einer Temperatur im Bereich von 70 bis 100 °C durchgeführt, bis ein Kondensationsgrad erreicht ist, der bei 25 °C einer Viskosität entspricht, deren Wert von der aktiven Substanz abhängt, und die Umsetzung wird mit einem Schritt (d) der nachträglichen Zugabe von Harnstoff abgeschlossen,
wobei die angegebenen NH₂-Gruppen die Mol Harnstoff und die Mol Melamin umfassen.

2. Verfahren nach Anspruch 1, **dadurch gekennzeichnet, dass** in Schritt (a) und/ oder (b) mindestens ein Teil des Harnstoffs und des Formaldehyds in Form einer konzentrierten wässrigen Lösung von Harnstoff und Formaldehyd zugegeben wird.

3. Verfahren nach einem der Ansprüche 1 und 2, **dadurch gekennzeichnet, dass** in Schritt (a) 5 bis 50 Gew.-% des gesamten Melamins zugegeben werden.

4. Verfahren nach einem der Ansprüche 1 bis 3, **dadurch gekennzeichnet, dass** die Kondensation des Schritts (b) während einer Zeitspanne von 20 bis 60 Minuten durchgeführt wird.

5. Verfahren nach einem der Ansprüche 1 bis 4, **dadurch gekennzeichnet, dass** die Kondensation des Schritts (c) während einer Zeitspanne von 30 bis 120 Minuten durchgeführt wird.

6. Verfahren nach einem der Ansprüche 1 bis 5, **dadurch gekennzeichnet, dass** jeder der Schritte (a), (b) und (c) bei einer Konzentration der aktiven Substanzen von 50 bis 75 Gew.-% durchgeführt wird.

7. Verfahren nach einem der Ansprüche 1 bis 6, **dadurch gekennzeichnet, dass** für die Durchführung von Schritt (d) nach Schritt (c) das Reaktionsmedium auf eine Temperatur von 40 bis 60 °C abgekühlt und der Harnstoff bei dem pH-Wert des vorhergehenden Schritts währen einer Zeitspanne, die bis zu 60 Minuten betragen kann, so zugegeben wird, dass das Molverhältnis von Formaldehyd und NH₂-Gruppen am Ende im Bereich von 0,25 bis 0,85 liegt.

8. Verfahren nach einem der Ansprüche 1 bis 7, **dadurch gekennzeichnet, dass** ein fertiges Harz mit einem Trockenextraktgehalt von 50 bis 75 Gew.-% hergestellt wird.

9. Verwendung des nach dem Verfahren nach einem der Ansprüche 1 bis 8 hergestellten wässrigen Aminoplastharzes als Klebstoff für die Herstellung von Holzwerkstoffen.

10. Holzwerkstoffe, die unter Verwendung des nach dem Verfahren nach einem der Ansprüche 1 bis 8 hergestellten wässrigen Aminoplastharzes als Klebstoff hergestellt werden.

## Claims

1. Process for the manufacture of an aqueous aminoplast resin based on urea, on formaldehyde and on melamine, the level of melamine in the final resin being between 10 and 40% by weight with respect to the total resin, according to which process urea, formaldehyde and melamine are condensed and then urea is added in order to obtain an F/NH₂ molar ratio in the final resin of between 0.25 and 0.85, **characterized in that** a methylolation stage (a) is carried out, followed out by two condensation stages (b) and (c), in the following way:
(a) a mixture in an aqueous medium of urea, of formaldehyde and of melamine, at a molar ratio of formaldehyde to NH₂ groups of 0.85 to 1.15, is heated at reflux for a period of time which can range up to 15 minutes while maintaining the pH of 7-8.5; then
(b) the first condensation stage is carried out at a pH value of between 5 and 6.5 and at a temperature of between 70°C and 100°C, up to a degree of condensation corresponding to a viscosity at 25°C with a value which depends on the active material of the medium, and the condensation reaction is halted by bringing the pH to a value of 7-8 and the temperature to a value of between 60 and 80°C;
(c) the second condensation stage is carried out by adding formaldehyde, urea and the remainder of the melamine, so that the molar ratio of formaldehyde to NH₂ groups is between 0.6 and 0.9, and by proceeding to the condensation at a pH value of between 8 and 10 and at a temperature of between 70 and 100°C, up to a degree of condensation corresponding to a viscosity at 25°C with a value which depends on the active material,
and the process is completed by a urea postaddition stage (d),
the NH₂ groups indicated comprising the moles of urea and the moles of melamine.

2. Process according to Claim 1, **characterized in that**, in stage (a) and/or (b), at least a portion of the urea and of the formaldehyde is introduced in the form of a concentrated aqueous solution of urea and of formaldehyde.

3. Process according to either of Claims 1 and 2, **characterized in that**, in stage (a), from 5 to 50% by weight of the total melamine is introduced.

4. Process according to one of Claims 1 to 3, **characterized in that** the condensation of stage (b) is carried out for a period of time of 20 to 60 minutes.

5. Process according to one of Claims 1 to 4, **characterized in that** the condensation of stage (c) is carried out for a period of time of 30 to 120 minutes.

6. Process according to one of Claims 1 to 5, **characterized in that** each of stages (a), (b) and (c) is carried out at a concentration of active materials of 50 to 75% by weight.

7. Process according to one of Claims 1 to 6, **characterized in that**, after stage (c), in order to carry out stage (d), the reaction medium is cooled to a temperature of 40 to 60°C and urea is added at the value of the pH of the preceding stage over a period of time which can range up to 60 minutes, so that the final molar ratio of formaldehyde to NH₂ groups is between 0.25 and 0.85.

8. Process according to one of Claims 1 to 7, **characterized in that** a final resin having a solids content of 50 to 75% by weight is prepared.

9. Use of the aqueous aminoplast resin obtained by the process as defined in one of Claims 1 to 8 as adhesive in the manufacture of wood-derived products.

10. Wood-derived materials obtained with the use, as adhesive, of the aqueous aminoplast resin obtained by the process as defined in one of Claims 1 to 8.
